(19) **Europäisches Patentamt**
**European Patent Office**
**Office européen des brevets**

(11) **EP 1 942 144 B1**

(12) **EUROPEAN PATENT SPECIFICATION**

(45) Date of publication and mention
of the grant of the patent:
**12.10.2011 Bulletin 2011/41**

(51) Int Cl.:
*C08L 67/02* *(2006.01)*

(21) Application number: **07025122.8**

(22) Date of filing: **27.12.2007**

(54) **Polyester resin composition and plastic article**

Polyesterharzzusammensetzung und Kunststoffartikel

Composition de résine polyester et article en plastique

(84) Designated Contracting States:
**DE FR GB NL**

(30) Priority: **29.12.2006 KR 20060138268**

(43) Date of publication of application:
**09.07.2008 Bulletin 2008/28**

(73) Proprietor: **CHEIL INDUSTRIES INC.**
**Gumi-si,**
**Gyeongsangbuk-do 730-710 (KR)**

(72) Inventors:
• **Shim, In Sik**
**Uiwang-si, Gyeonggi-do (KR)**

• **Lim, Jong Cheol**
**Dongan-gu**
**Anyang-si, Gyeonggi-do (KR)**

(74) Representative: **Bublak, Wolfgang**
**Bardehle Pagenberg**
**Prinzregentenplatz 7**
**81675 München (DE)**

(56) References cited:
**WO-A-2005/121232    WO-A-2006/016458**
**US-A- 5 399 605**

**Description**

The present invention relates to a polyester resin composition and a plastic article.

In a conventional method for producing a metal-deposited reflector, e.g., a head lamp bezel for automobiles, a reflector or an illuminator, primer-application is performed prior to metal-deposition, to improve the surface smoothness of the metal-deposited reflector. However, since the primer contains an organic solvent, the method can have a negative environmental impact. In addition, it can take a long time to form a coating film, which in turn can result in higher production costs and lower productivity.

For this reason, recently, metal has been directly applied to the surface of a light-reflective side, without applying any primer thereto.

In order to employ such a direct deposition, the metal-deposited reflector must exhibit not only superior surface smoothness, but also excellent heat resistance so that it does not undergo deformation when being applied to a head lamp bezel for automobiles, an illuminator, and the like.

Accordingly, a variety of efforts have been made to develop a material that satisfies the requirements of surface smoothness and heat resistance and is thus suitable for use as a metal-deposited reflector.

However, conventionally known or researched materials still have unsolved problems such as insufficient heat resistance and poor surface smoothness and do not satisfactorily exhibit physical properties which are required for metal-deposited reflector materials to which direct deposition is applied.

Patent document US 5,399,605 discloses a polyester resin composition comprising: (a) 50 to 70 parts by weight of a polyester resin composed mainly of a repeating unit of butylenes terephthalate; (b) 30 to 50 parts by weight of a polyester resin composed mainly of a repeating unit of ethylene terephthalate; and (c) 0.1 to 10 parts by weight of a polyalkylene glycol derivative having at least one end group of carboxylate and alkyl ether, per 100 parts by the total weight of the polyester resins (a) and (b).

The present invention has been made to solve the foregoing problems of the prior art and it is one aspect of the present invention to provide a polyester resin composition capable of improving physical properties, e.g., heat resistance and surface smoothness, of a thermoplastic polyester resin.

It is another aspect of the present invention to provide a plastic article produced from the polyester resin composition.

In accordance with one aspect of the present invention, there is provided a polyester resin composition according to claim 1.

In accordance with another aspect of the present invention, there is provided a plastic article produced from the polyester resin composition.

Details of other aspects and exemplary embodiments of the present invention are encompassed in the following detailed description.

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

In one aspect, the present invention is directed to a polyester resin composition according to claim 1.

Since the polyester resin composition comprises, in addition to a polybutylene terephthalate base resin as an essential ingredient, a polyethylene terephthalate glycol resin, an inorganic filler and a resin stabilizer, in a desirable content range, it is capable of imparting improved physical properties such as heat resistance and surface smoothness to a thermoplastic polyester resin.

Accordingly, the polyester resin composition is suitable as a material for a metal-deposited reflector, e.g., a head lamp bezel for automobiles, a reflector or an illuminator.

A more detailed explanation of respective ingredients constituting the polyester resin composition will be given below.

The polyester resin composition comprises a polybutylene terephthalate base resin.

As the polybutylene terephthalate base resin, for example, a polybutylene terephthalate polymer may be used which is polycondensed by direct-esterification or transesterification between 1,4-butanediol and terephthalic acid or dimethyl terephthalate.

Alternatively, as the polybutylene terephthalate base resin, there may be used a copolymer or mixture of polybutylene terephthalate and an impact strength-reinforcing ingredient selected from polytetramethylene glycol (PTMG), polyethylene glycol (PEG), polypropylene glycol (PPG), low-molecular-weight (Mw 400~6,000 g/mol) aliphatic polyester, aliphatic polyamide, and the like, and combinations thereof. The impact strength-reinforcing ingredient is copolymerized or mixed with the polybutylene terephthalate base resin so as to impart more improved impact strength to the polybutylene terephthalate base resin.

In addition, the polybutylene terephthalate base resin has an intrinsic viscosity η (measured in an o-chlorophenol solvent at 25°C) of 0.36 to 1.60, for example 0.52 to 1.25. When the intrinsic viscosity is less than 0.36, the mechanical properties of the thermoplastic polyester resin may be undesired. Meanwhile, when the intrinsic viscosity exceeds 1.60, the moldability of the thermoplastic polyester resin may be deteriorated.

The polyester resin composition further comprises a polyethylene terephthalate glycol resin. The polyethylene terephthalate glycol resin is an amorphous polyethylene terephthalate copolymer containing 1,4-cyclohexanedimethanol (CHDM) as a copolymer ingredient and is a copolyester resin in which ethylene glycol constituting a polyethylene terephthalate resin is partially substituted by 1,4-cyclohexanedimethanol.

As the polyethylene terephthalate glycol resin, for example, there may be used a polyethylene terephthalate resin in which 3 to 48 mol%, for example 5 to 20 mol%, of ethylene glycol of a polyethylene terephthalate resin is substituted by 1,4-cyclohexanedimethanol. When the amount of 1,4-cyclohexanedimethanol substituted is less than 3 mol%, the surface smoothness of the thermoplastic polyester resin may be not improved to a desired level. Meanwhile, when the amount of 1,4-cyclohexanedimethanol substituted exceeds 48 mol%, the heat resistance of the thermoplastic polyester resin may be deteriorated.

The polyethylene terephthalate glycol resin is present in the polyester resin composition of the invention in an amount of 10 to 50 parts by weight, based on 100 parts by weight of the polybutylene terephthalate base resin. When the content of the polyethylene terephthalate glycol resin is less than 10 parts by weight, the surface smoothness of the thermoplastic polyester resin may not be satisfactorily improved. Meanwhile, when the content of the polyethylene terephthalate glycol resin exceeds 50 parts by weight, the heat resistance of the thermoplastic polyester resin may be deteriorated.

The polyester resin composition comprises further an inorganic filler. The inclusion of the inorganic filler in the polyester resin composition enables improvement in mechanical properties or heat resistance of the thermoplastic polyester resin.

Examples of suitable inorganic fillers include titanium whisker, talc, wollastonite, bentonite, montmorillonite, calcium carbonate, clay, kaolin, and the like. The inorganic filler may be used alone or in combination thereof. The inorganic filler that can be used for the polyester resin composition is not limited to these examples. Any inorganic filler may be used without particular limitation so long as it is conventionally used in the art.

The inorganic filler has an average diameter (d50 measured by laser diffraction particle size analyzer) of 0.1 to 2 $\mu$m, for example 0.3 to 1 $\mu$m. When the average diameter of the inorganic filler is less than 0.1 $\mu$m, the dispersibility of the inorganic filler may be deteriorated and the heat resistance of the thermoplastic polyester resin is thus undesirable. Meanwhile, when the average diameter of the inorganic filler exceeds 2 $\mu$m, the surface smoothness of the thermoplastic polyester resin may be deteriorated.

Use of an inorganic filler whose surface is coated with an organic compound can improve dispersibility with the polybutylene terephthalate base resin or the polyethylene terephthalate glycol resin.

The inorganic filler is present in the polyester resin composition of the invention in an amount of 0.1 to 10 parts by weight, based on 100 parts by weight of the polybutylene terephthalate base resin. When the content of the inorganic filler is less than 0.1 parts by weight, the heat resistance of the thermoplastic polyester resin may be deteriorated. Meanwhile, when the content of the inorganic filler exceeds 10 parts by weight, the surface smoothness of the thermoplastic polyester resin may be deteriorated.

The polyester resin composition comprises a resin stabilizer, in addition to the respective ingredients.

For example, during the preparation of the thermoplastic polyester resin or the plastic article from the polyester resin composition through extrusion or injection, the resin stabilizer stabilizes the polybutylene terephthalate base resin or polyethylene terephthalate glycol resin contained in the polyester resin composition and prevents decomposition (*e.g.*, thermal decomposition) of these resins.

The incorporation of the resin stabilizer into the polyester resin composition enables the polybutylene terephthalate base resin or the polyethylene terephthalate glycol resin contained therein to exhibit their inherent properties more favorably. Accordingly, physical properties, such as surface smoothness or heat resistance, of the polyester thermoplastic resin can be greatly improved.

Any resin stabilizer may be used without particular limitation so long as it is conventionally known in the art. Exemplary resin stabilizers suitable for use in the present invention include resin stabilizers selected from the group consisting of phosphoric acid, triphenyl phosphite, trimethyl phosphite, triisodecyl phosphite, tri-(2,4-di-t-butylphenyl) phosphite, 3,5-di-t-butyl-4-hydroxybenzyl phosphonic acid and, the like, and mixtures thereof.

The resin stabilizer is present in the polyester resin composition of the invention in an amount of 0.01 to 5 parts by weight, based on 100 parts by weight of the polybutylene terephthalate base resin. When the content of the resin stabilizer exceeds 5 parts by weight, the mechanical properties of the thermoplastic polyester resin may be deteriorated.

The polyester resin composition can be prepared by mixing the aforementioned ingredients with one another. The polyester thermoplastic resin can be prepared from the polyester resin composition by a conventional method such as melt-extrusion in an extruder. The plastic article can be produced from the polyester thermoplastic resin.

In another aspect, the present invention is directed to a plastic article produced from the polyester resin composition. The plastic article, for example, can include a resin matrix comprising a polybutylene terephthalate base resin and a polyethylene terephthalate glycol resin which are substantially homogeneously mixed with each other, and an inorganic filler and a resin stabilizer, each of which is dispersed in the resin matrix.

Because the plastic article comprises a resin matrix comprising a polybutylene terephthalate base resin and a polyethylene terephthalate glycol resin, the resins substantially homogeneously mixed with each other, and an inorganic filler and a resin stabilizer, each of which is also substantially homogeneously dispersed in the resin matrix, it can exhibit more improved physical properties, e.g., heat resistance or surface smoothness, through interactions between the respective ingredients thereof.

Accordingly, the plastic article is suitable for use in the production of a metal-deposited reflector, e.g., a head lamp bezel for automobiles, a reflector or an illuminator.

Hereinafter, the present invention will be better understood from the following examples. However, these examples are given for illustrative purposes and are not to be construed as limiting the scope of the invention.

The following is a more detailed description of ingredients, i.e., (A) polybutylene terephthalate base resin B) polyethylene terephthalate glycol resin, (C) inorganic filler, (D) resin stabilizer, (E) polyethylene terephthalate resin (Comparative Example) and (F) polycarbonate resin (Comparative Example), used in the following Examples and Comparative Examples.

(A) Polybutylene terephthalate base resin

The polybutylene terephthalate base resin used herein is a polybutylene terephthalate polymer having an intrinsic viscosity η of 1.0 (measured in an o-chlorophenol solvent at 25°C).

(B) Polyethylene terephthalate glycol resin

The polyethylene terephthalate glycol resin used herein is an amorphous polyethylene terephthalate copolymer which contains 3 to 48 mol% of 1,4-cyclohexanedimethanol as a copolymer ingredient and has an intrinsic viscosity η of 0.8 (measured in an o-chlorophenol solvent at 25°C).

(C) Inorganic filler

The inorganic filler used herein is talc with an average diameter 0.5 $\mu$m.

(D) Resin stabilizer

The resin stabilizer used herein is a mixture (1 : 2) of IRGANOX B 215 (IRGANOX 1010, hindered phenolic antioxidant) and IRGAFOS 168 (organophosphite), both of which are available from Ciba Geigy Corp..

(E) Polyethylene terephthalate resin (Comparative Example)

The polyethylene terephthalate resin used herein is a polyethylene terephthalate resin having an intrinsic viscosity η of 0.8 (measured in an o-chlorophenol solvent at 25°C).

(F) Polycarbonate resin (Comparative Example)

The polycarbonate resin used herein is a bisphenol-A polycarbonate resin having a weight average molecular weight (Mw) of 25,000 g/mol.

## Examples 1 & 3 and Comparative Examples 1 to 6

The respective ingredients mentioned above are mixed in accordance with the composition as set forth in Table 1 to prepare a polyester resin composition, and the composition is then melted and mixed in a melt twin-screw extruder (Φ=45 mm) at 240 to 280°C to prepare a polyester resin in the form of a chip. The chip thus obtained is dried at 130°C for 5 hours or more and introduced into a screw-injection machine at 240 to 280°C to prepare a flat sample (width 10 cm x length 10 cm x thickness 0.3 cm) for measurement of physical properties.

**TABLE 1**

|  | Examples No. | | | Comparative Examples No. | | | | | |
|---|---|---|---|---|---|---|---|---|---|
|  | 1 | 2 | 3 | 1 | 2 | 3 | 4 | 5 | 6 |
| (A) Polybutylene terephthalate resin | 100 | 100 | 100 | 100 | 100 | 100 | 100 | 100 | 100 |
| (B) Polyethylene terephthalate glycol resin | 20 | 40 | 40 | - | 40 | 80 | 40 | - | - |
| (C) Inorganic filler | 3 | 3 | 1 | 3 | - | 3 | 15 | 3 | 3 |

(continued)

|  | Examples No. | | | Comparative Examples No. | | | | | |
|---|---|---|---|---|---|---|---|---|---|
|  | 1 | 2 | 3 | 1 | 2 | 3 | 4 | 5 | 6 |
| (D) Resin stabilizer | 0.5 | 0.5 | 0.5 | 0.5 | 0.5 | 0.5 | 0.5 | 0.5 | 0.5 |
| (E) Polyethylene terephthalate resin | - | - | - | - | - | - | - | 40 | - |
| (F) Polycarbonate resin | - | - | - | - | - | - | - | - | 40 |

The physical properties of the sample are measured in accordance with the following methods.

First, the heat resistance of the sample is measured in accordance with ASTM (American Standard Test Method) D648 used to measure heat resistance of plastics (Heat resistance evaluation).

The gloss of the sample is measured using a gloss meter (Gloss evaluation).

Aluminum is directly vacuum-deposited on the sample using an aluminum deposition system, without a coating of primer on the sample. A square plate of 10 x 10 mm is partitioned into 100 cells having a size of 1 mm x 1 mm, and the level of the aluminum stripped from the plate is measured with a scratch test using a tape (evaluation of aluminum deposition efficiency).

A surface roughness $R_z$ is measured in accordance with the following method (surface smoothness evaluation).

A 10-point average surface roughness Rz is determined as a distance between an average height of the first to the fifth highest peaks and an average height of the first to the fifth lowest valleys, in accordance with an ISO-roughness method, as depicted in Reference Fig. I below:

* L is an arbitrary length measured (usually 3mm).

* R1, R3,...R9 are the first to the fifth highest peaks and R2, R4,...R10 are the first to the fifth lowest peaks.

standard length L

(I)

The average surface roughness Rz is obtained from Equation I below:

**Equation I**

$$R_z = \frac{(R_1 + R_3 + \cdots + R_9) - (R_2 + R_4 + \cdots + R_{10})}{5}$$

The physical property values thus measured are shown in Table 2 below.

**TABLE 2**

| | | Heat resistance (°C) | Gloss | Aluminum deposition efficiency (%) | $R_z$ ($\mu$m) |
|---|---|---|---|---|---|
| Example No. | 1 | 175 | 93 | 3 | 0.10 |
| | 2 | 168 | 95 | 2 | 0.10 |
| | 3 | 160 | 96 | 2 | 0.09 |
| Comparative No. | 1 | 182 | 83 | 6 | 0.18 |
| | 2 | 145 | 96 | 2 | 0.08 |
| | 3 | 142 | 95 | 5 | 0.09 |
| | 4 | 181 | 85 | 10 | 0.16 |
| | 5 | 178 | 81 | 5 | 0.20 |
| | 6 | 140 | 93 | 2 | 0.14 |

The data of Table 2 demonstrates that the samples of Examples 1 to 3, which comprise a polybutylene terephthalate base resin, a polyethylene terephthalate glycol resin, an inorganic filler and a resin stabilizer, exhibit more improved properties such as gloss, aluminum deposition efficiency and surface smoothness, while maintaining heat resistance, when compared to the sample of Comparative Example 1, which comprises no polyethylene terephthalate glycol resin.

In addition, the data of Table 2 demonstrates that the samples of Examples 1 to 3 exhibit not only more improved surface smoothness, but also superior heat resistance or gloss, as compared to the samples of Comparative Examples 5 and 6, which comprise a polycarbonate resin and a polyethylene terephthalate resin, respectively, instead of the polyethylene terephthalate glycol resin.

Further, it can be seen that the samples of Example 1 to 3 exhibit more improved heat resistance, while exhibiting equivalent gloss, aluminum deposition efficiency and surface smoothness, as compared to the sample of Comparative Example 2, which comprises no inorganic filler.

Further, it can be seen that the samples of Example 1 to 3, which comprise respective ingredients within a desirable content range, exhibit superior heat resistance (as compared to Comparative Example 3), and high gloss, excellent surface smoothness and good aluminum deposition efficiency (as compared to Comparative Example 4), as compared to the samples of Comparative Examples 3 and 4 which comprise respective ingredients outside of the content range.

In conclusion, these results demonstrate that the samples of Examples 1 to 3 according to the present invention are superior in terms of overall physical properties such as gloss, heat resistance, surface smoothness and aluminum deposition efficiency.

**Claims**

1.  A polyester resin composition comprising:

    100 parts by weight of a polybutylene terephthalate base resin;
    10 to 50 parts by weight of a polyethylene terephthalate glycol resin, wherein the polyethylene terephthalate glycol resin includes a resin in which 3 to 48 mol% of ethylene glycol of a polyethylene terephthalate resin is substituted by 1,4-cyclohexanedimethanol;
    0.1 to 10 parts by weight of an inorganic filler; and
    0.01 to 5 parts by weight of a resin stabilizer.

2.  The polyester resin composition according to claim 1, wherein the polybutylene terephthalate base resin includes a polybutylene terephthalate polymer polycondensed by direct esterification or transesterification between 1,4-butanediol and terephthalic acid or dimethyl terephthalate.

3.  The polyester resin composition according to claim 1, wherein the polybutylene terephthalate base resin includes a polybutylene terephthalate copolymer or mixture of polybutylene terephthalate and a compound selected from polytetramethylene glycol (PTMG), polyethylene glycol (PEG), polypropylene glycol (PPG), low-molecular-weight aliphatic polyester or aliphatic polyamide.

**4.** The polyester resin composition according to any of claims 1 to 3, wherein the polybutylene terephthalate base resin has an intrinsic viscosity η (measured in an o-chlorophenol solvent at 25°C) of 0.36 to 1.60 dl/g.

**5.** The polyester resin composition according to any of claims 1 to 4, wherein the inorganic filler includes titanium whisker, talc, wollastonite, bentonite, montmorillonite, calcium carbonate, clay, kaolin or a mixture thereof.

**6.** The polyester resin composition according to any of claims 1 to 5, wherein the inorganic filler has an average diameter of 0.1 to 2 μm.

**7.** The polyester resin composition according to any of claims 1 to 6, wherein the resin stabilizer is selected from the group consisting of phosphoric acid, triphenyl phosphite, trimethyl phosphite, triisodecyl phosphite, tri-(2,4-di-t-butylphenyl)phosphite, 3,5-di-t-butyl-4-hydroxybenzyl phosphonic acid and mixtures thereof.

**8.** A plastic article obtainable from the polyester resin composition according to any of claims 1 to 7.

**9.** A plastic article comprising:

a resin matrix comprising 100 parts by weight of a polybutylene terephthalate base resin and 10 to 50 parts by weight of a polyethylene terephthalate glycol resin, wherein the polyethylene terephthalate glycol resin includes a resin in which 3 to 48 mol% of ethylene glycol of a polyethylene terephthalate resin is substituted by 1,4-cyclohexanedimethanol, the resins being substantially homogeneously mixed with each other; and
0.1 to 10 parts by weight of an inorganic filler and 0.01 to 5 parts by weight of a resin stabilizer, each being dispersed in the resin matrix.

**Patentansprüche**

**1.** Polyesterharzzusammensetzung, umfassend:

100 Gewichtsteile eines Polybutylenterephthalatbasisharzes;
10 bis 50 Gewichtsteile eines Polyethylenterephthalathlycolharzes, wobei das Polyethylenterephthalatglycolharz ein Harz einschließt, in welchem 3 bis 48 mol-% Ethylenglycol eines Polyethylenterephthalatharzes durch 1,4-Cyclohexandimethanol ersetzt sind;
0,1 bis 10 Gewichtsteile eines anorganischen Füllstoffs; und
0,01 bis 5 Gewichtsteile eines Harzstabilisators.

**2.** Polyester-Harzzusammensetzung nach Anspruch 1, wobei das Polybutylenterephthalatbasisharz ein Polybutylenterephthalatpolymer einschließt, das durch direkte Veresterung oder Umesterung zwischen 1,4-Butandiol und Terephthalsäure oder Dimethylterephthalat polykondensiert ist.

**3.** Polyesterharzzusammensetzung nach Anspruch 1,wobei das Polybutylenterephthalatbasisharz ein Polybutylenterephthalatcopolymer oder ein Gemisch aus Polybutylenterephthalat und einer Verbindung, ausgewählt aus Polytetramethylenglycol (PTMG), Polyethylenglycol (PEG), Polypropylenglycol (PPG), aliphatischem Polyester oder aliphatischem Polyamid mit niedrigem Molekulargewicht einschließt.

**4.** Polyesterharzzusammensetzung nach einem der Ansprüche 1 bis 3, wobei das Polybutylenterephthalatbasisharz eine Grenzviskosität η (gemessen in einem o-Chlorphenol-Lösungsmittel bei 25°C) von 0,36 bis 1,60 dl/g aufweist.

**5.** Polyesterharzzusammensetzung nach einem der Ansprüche 1 bis 4,wobei der anorganische Füllstoff Titanwhisker, Talkum, Wollastonit, Bentonit, Montmorillonit, Calciumcarbonat, Ton, Kaolin oder ein Gemisch davon einschließt.

**6.** Polyesterharzzusammensetzung nach einem der Ansprüche 1 bis 5, wobei der anorganische Füllstoff einen mittleren Durchmesser von 0,1 bis 2 μm aufweist.

**7.** Polyesterharzzusammensetzung nach einem der Ansprüche 1 bis 6, wobei der Harzstabilisator ausgewählt ist aus der Gruppe, bestehend aus Phosphorsäure, Triphenylphosphit, Trimethylphosphit, Triisodecylphosphit, Tri(2,4-di-t-butylphenyl)phosphit, 3,5-Di-t-butyl-4-hydroxybenzylphosphonsäure und Gemischen davon.

**8.** Kunststoffgegenstand, der aus der Polyesterharzzusammensetzung nach einem der Ansprüche 1 bis 7 erhältlich ist.

**9.** Kunststoffgegenstand, umfassend:

eine Harzmatrix, 100 Gewichtsteile eines Polybutylenterephthalatbasisharzes und
10 bis 50 Gewichtsteile eines Polyethylenterephthalathlycolharzes, wobei das Polyethylenterephthalatglycolharz ein Harz einschließt, in welchem 3 bis 48 mol-% Ethylenglycol eines Polyethylenterephthalatharzes durch 1,4-Cyclohexandimethanol ersetzt sind; wobei die harze miteinander im Wesentlichen homogen gemischt sind; und
0,1 bis 10 Gewichtsteile eines anorganischen Füllstoffs und 0,01 bis 5 Gewichtsteile eines Harzstabilisators, die jeweils in der Harzmatrix dispergiert sind.

**Revendications**

**1.** Composition de résine de polyester, comprenant :

100 parties en poids d'une résine de base de poly(théréphtalate d'éthylène) ;
10 à 50 parties en poids d'une résine de poly(téréphtalate d'éthylène)-glycol, la résine de poly(téréphtalate d'éthylène)-glycol comprenant une résine dans laquelle 3 à 48 % en moles de l'éthylèneglycol d'une résine de poly(téréphtalate d'éthylène) sont remplacés par du 1,4-cyclohexanediméthanol;
0,1 à 10 parties en poids d'une charge inorganique ; et
0,01 à 5 parties en poids d'un stabilisant de résine.

**2.** Composition de résine de polyester selon la revendication 1, dans laquelle la résine de base de poly(téréphtalate de butylène) comprend un polymère poly(téréphtalate de butylène) polycondensé par estérification ou transestérification directe entre le 1,4-butanediol et l'acide téréphtalique ou le téréphtalate de diméthyle.

**3.** Composition de résine de polyester selon la revendication 1, dans laquelle la résine de base de poly(téréphtalate de butylène) comprend un copolymère de poly(téréphtalate de butylène) ou un mélange de poly(téréphtalate de butylène) et d'un composé choisi parmi le polytétraméthylèneglycol (PTMG), le polyéthylèneglycol (PEG), le polypropylèneglycol (PPG), les polyesters aliphatiques à faible masse moléculaire, ou les polyamides aliphatiques.

**4.** Composition de résine de polyester selon l'une quelconque des revendications 1 à 3, dans laquelle la résine de base de poly(téréphtalate de butylène) a une viscosité intrinsèque $\eta$ (mesurée dans un solvant o-chlorophénol à 25°C) de 0,36 à 1,60 dl/g.

**5.** Composition de résine de polyester selon l'une quelconque des revendications 1 à 4, dans laquelle la charge inorganique comprend des trichites de titane, du talc, de la wollastonite, de la bentonite, de la montmorillonite, du carbonate de calcium, de l'argile, du kaolin ou un mélange de ceux-ci.

**6.** Composition de résine de polyester selon l'une quelconque des revendications 1 à 5, dans laquelle la charge inorganique a un diamètre moyen de 0,1 à 2 $\mu$m.

**7.** Composition de résine de polyester selon l'une quelconque des revendications 1 à 6, dans laquelle le stabilisant de résine est choisi dans le groupe consistant en l'acide phosphorique, le phosphite de triphényle, le phosphite de triméthyle, le phosphite de triisodécyle, le phosphite de tri(2,4-di-tert-butylphényle), l'acide 3,5-di-tert-butyl-4-hydroxybenzyl-phosphonique, et les mélanges de ceux-ci.

**8.** Article plastique obtenu à partir de la composition de résine de polyester selon l'une quelconque des revendications 1 à 7.

**9.** Article plastique comprenant une matrice de résine comprenant 100 parties en poids d'une résine de base de poly(téréphtalate de butylène) et 10 à 50 parties en poids d'une résine de poly(téréphtalate d'éthylène)-glycol, la résine de poly(téréphtalate d'éthylène)-glycol comprenant une résine dans laquelle 3 à 48 % en moles de l'éthylèneglycol d'une résine de poly(téréphtalate d'éthylène) sont remplacés par du 1,4-cyclohexane-diméthanol, les résines étant mélangées l'une à l'autre d'une manière pratiquement homogène ; et 0,1 à 10 parties en poids d'une charge inorganique et 0,01 à 5 parties en poids d'un stabilisant de résine, chacun étant dispersé dans la matrice de résine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5399605 A